Europäisches Patentamt

European Patent Office

Office européen des brevets

(11) Veröffentlichungsnummer : **0 174 435**
**B1**

(12) **EUROPÄISCHE PATENTSCHRIFT**

(45) Veröffentlichungstag der Patentschrift :
**11.11.87**

(21) Anmeldenummer : **85105892.5**

(22) Anmeldetag : **14.05.85**

(51) Int. Cl.⁴ : **G 03 B 27/62, G 03 G 15/00**

(54) Vorrichtung zur Bildung einer Maske.

(30) Priorität : **18.08.84 DE 3430535**

(43) Veröffentlichungstag der Anmeldung :
**19.03.86 Patentblatt 86/12**

(45) Bekanntmachung des Hinweises auf die Patenterteilung : **11.11.87 Patentblatt 87/46**

(84) Benannte Vertragsstaaten :
**BE CH FR GB IT LI NL SE**

(56) Entgegenhaltungen :
**DE-C- 835 399**
**US-A- 1 430 615**
**US-A- 4 190 357**

(73) Patentinhaber : **Krause-Biagosch GmbH**
**Paul-Schwarze-Strasse 5**
**D-4800 Bielefeld 14 (DE)**

(72) Erfinder : **Sielemann, Wolfram**
**Hindenburgstrasse 21**
**D-4980 Bünde (DE)**

(74) Vertreter : **Elbertzhagen, Otto et al**
**Patentanwälte Thielking & Elbertzhagen Gadderbaumer Strasse 20**
**D-4800 Bielefeld 1 (DE)**

## Beschreibung

Die Erfindung bezieht sich auf eine Vorrichtung zur Bildung einer Maske der im Gattungsbegriff des Patentanspruchs 1 näher bezeichneten Art.

Aus der US-A-4 190 357 sind solche Vorrichtungen mit flexiblen Stahlstreifen bekannt. Jedoch sind die Maskenabschnitte üblicherweise als steife, linealartige Metallstreifen ausgebildet, die eine merkliche Dicke haben. Die Dicke der Maskenabschnitte behindert eine optimal scharfe Randabbildung der Maske, weswegen die Maskenabschnitte möglichst dünn sein sollten. Je dünner die Maskenabschnitte jedoch sind, desto geringer ist ihre Steifigkeit, womit die Gefahr besteht, daß sie sich gegenüber der Grundebene verwerfen und bei Berührung beschädigt werden können.

Andererseits ist die Maske beim Kontaktkopieren einer durchleuchtbaren Vorlage zwischen dieser und einem Film, einer Druckplatte oder dergleichen angeordnet, hier ist nur mit einer extrem dünnen Maske ein randscharfes Kopieren möglich. Es muß also die Oberseite der durchleuchtbaren Vorlage zusammen mit den Maskenabschnitten in der Grundebene liegen. Dabei dürfen Haltevorrichtungen für die Maskenabschnitte nicht über die Grundebene hinaus vorstehen, damit z. B. der Film oder die Druckplatte nicht beschädigt werden und ein inniger Kontakt zwischen Druckplatte, Vorlage und Maske erreicht wird.

Bislang war es nicht möglich, die Maskenabschnitte sehr dünn zu machen und sie andererseits in der Grundebene ausreichend zu sichern.

Der Erfindung liegt deshalb die Aufgabe zugrunde, eine Vorrichtung der eingangs genannten Art dahingehend zu verbessern, daß Maskenabschnitte mit sehr geringer Dicke verwendet werden können, die zur Einhaltung der Lage in der Grundebene ausreichend gestrafft sind.

Diese Aufgabe wird nach der Erfindung durch die kennzeichnenden Merkmale des Patentanspruchs 1 gelöst.

Der besondere Vorteil einer erfindungsgemäßen Maskiervorrichtung liegt darin, daß infolge der Umlenkung des Endes des betreffenden Maskenabschnittes durch das Umlenkelement das Spannelement so angeordnet werden kann, daß ein Überstand der gesamten Haltevorrichtung über die Grundebene hinaus zur Seite der Vorlage hin vermieden ist. Die Straffung des Maskenabschnittes durch Beaufschlagung mittels einer Zugkraft ermöglicht es, für den Maskenabschnitt eine besonders dünne Metallfolie zu verwenden, deren Dicke in der Größenordnung von 1/100 mm liegt. Das Umlenkelement andererseits grenzt tangential an die Grundebene an und stellt eine exakte Ausrichtung des gespannten Maskenabschnittes in der Grundebene sicher. Zur Ausrichtung auf die Grundebene kann das Umlenkelement gegenüber seinem Trägerelement höhenverstellbar sein.

Eine vorteilhafte Weiterbildung der erfindungsgemäßen Vorrichtung kann darin bestehen, das Spannelement als federbeaufschlagte Spule auszubilden.

Dadurch eröffnet sich die Möglichkeit, die Maskenbänder als Verschleißteile auf den Spulen aufzurollen bzw. abzurollen, um bei Beschädigungen oder sonstigen Beeinträchtigungen des jeweilig verwendeten Maskenabschnittes von Hand oder automatisch weiterzuspulen, bis wieder ein unbeschädigter Metallstreifen als aktiver Maskenabschnitt zur Verfügung steht.

Eine weitere vorteilhafte Ausgestaltung der erfindungsgemäßen Vorrichtung kann darin bestehen, daß die an beiden Seiten eines Maskenabschnittes angeordneten Umlenkelemente für sich oder in Verbindung mit dem Spannelement durch eine Hub- oder Stellvorrichtung aus der Grundebene heraus von der Vorlage abgehoben werden können, damit bei einer Querverstellung eine Reibung zwischen der Vorlage und dem Maskenmaterial vermieden wird.

Weitere vorteilhafte Ausgestaltungsmerkmale der Erfindung ergeben sich aus den Unteransprüchen.

Die Erfindung wird nachfolgend anhand der Zeichnung an Ausführungsbeispielen näher erläutert. Dabei zeigen :

Fig. 1 die Ansicht einer Maskiervorrichtung mit verstellbaren Maskenabschnitten,

Fig. 2 in perspektivischer Darstellung eine erste Ausführungsform einer Haltevorrichtung für die Maskenabschnitte der Vorrichtung nach Fig. 1 und

Fig. 3 eine perspektivische Ansicht einer zweiten Ausführungsform einer Haltevorrichtung für die Maskenabschnitte der Vorrichtung nach Fig. 1.

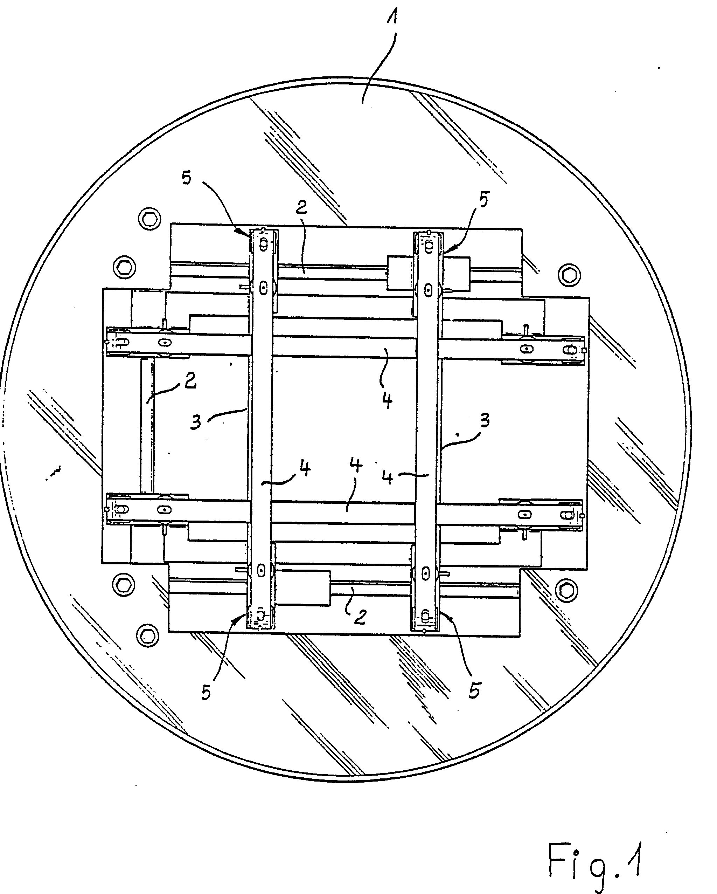

Man erkennt in Fig. 1 eine Grundplatte 1, deren Ober- bzw. Unterseite die Grundebene bildet, die mit der Kontaktebene einer durchleuchtbaren Vorlage, wie einem Filmnegativ oder -diapositiv, identisch ist. An der der Grundebene abgewandten Seite der Grundplatte 1 sind Führungen 2 in rechtwinkliger Anordnung zueinander vorgesehen, an denen Trägerelemente 3 relativ zueinander verschieblich gelagert sind. Jedes der Trägerelemente 3 trägt parallel im Abstand dazu einen Maskenabschnitt 4, der mit der dem Trägerelement 3 abgewandten Seite in der Grundebene liegt. Die Verbindung zwischen dem jeweiligen Trägerelement 3 und dem zugehörigen Maskenabschnitt 4 erfolgt über am Ende der Maskenabschnitte 4 angeordnete Haltevorrichtungen 5, wobei der Maskenabschnitt 4 den Bereich zwischen den beiden zugehörigen Haltevorrichtungen 5 frei überspannt. Die einander kreuzenden oder überdeckenden Maskenabschnitte 4 ergänzen sich zu einer quadratischen oder rechteckförmigen Maske, deren Lage und Größe durch Verschieben der einzelnen Maskenabschnitte relativ zueinander verändert werden kann.

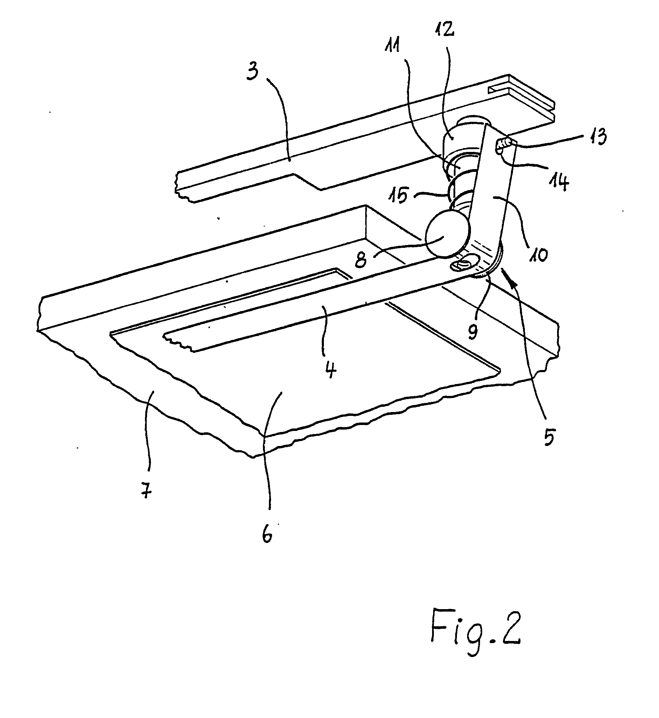

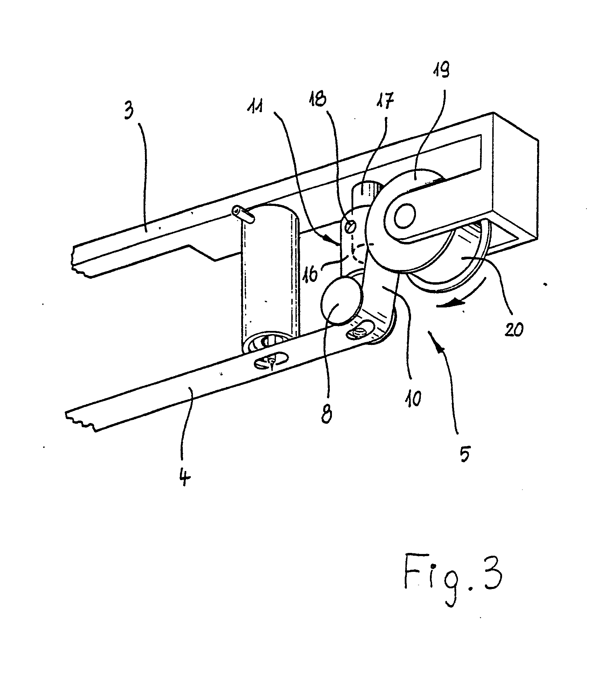

Die Maskenabschnitte 4 bestehen je aus einer sehr dünnen, flexiblen Metallfolie, weshalb über die Haltevorrichtungen 5 die Maskenabschnitte 4 so gestrafft werden müssen, daß sie sich gegenüber der Grundebene nicht verwerfen können. Dazu ist die Haltevorrichtung 5 entsprechend ausgebildet, was im einzelnen die Figuren 2 und 3 veranschaulichen.

In Fig. 2 ist schematisch eine durchleuchtbare Vorlage 6 auf einem Zwischenträger oder einer Glasplatte 7 gezeigt, die hier an der Oberseite des Maskenabschnittes 4 anliegt. Die Haltevorrichtung 5 umfaßt hier ein Umlenkelement 8 mit einer zylindrischen Mantelfläche 9, die tangential an die Grundebene angrenzt, wenn man bei Verwendung besonders dünner Maskenabschnitte 4 von dem notwendigen Abstand entsprechend der Dicke des Maskenabschnittes 4 absieht. Die Zylinderachse des Umlenkelementes 8 liegt parallel zur Querrichtung des streifenförmigen Maskenabschnittes 4, der den Umfang des Umlenkelementes 8 über Winkel von etwas weniger als 90 Grad umschlingt. Dadurch besitzt der Maskenabschnitt 4 ein von der Grundebene abgewinkeltes Ende 10.

Das Umlenkelement 8 sitzt auf einer zylindrischen Stütze 11, die lotrecht auf dem Trägerelement 3 angeordnet ist. Auf der Stütze 11 ist ein Ring 12 in Achsrichtung verschiebbar, der somit auf der Stütze 11 geführt ist. Der Ring 12 besitzt einen radial vorstehenden Zapfen 13, auf den das Ende 10 des Maskenabschnittes 4, das dazu eine Durchbrechung 14 hat, aufgesteckt ist. Der Ring 12 zieht das Ende 10 des Maskenabschnittes 4 von dem Umlenkelement 8 weg, wodurch der beidendig befestigte Maskenabschnitt 4 unter Zugspannung gehalten ist. Die Zugkraft wird von einer Feder 15 aufgebracht, die als Druckfeder auf der Stütze 11 des Umlenkelementes 8 sitzt und sich einerseits an dem Ring 12 und andererseits an dem Umlenkelement 8 abstützt.

Damit das Umlenkelement 8 auf einer Diametralachse schwenkbar ist, kann es entweder selbst mit der Stütze 11 drehbar verbunden sein, auch kann die Stütze 11 auf dem Trägerelement 3 so angeordnet sein, daß die Stütze 11 einschließlich dem Umlenkelement 8 um die Stützenlängsachse schwenkbar ist. Das Umlenkelement 8 kann sich damit selbsttätig auf den Verlauf des Maskenabschnittes 4 einstellen.

Schließlich kann die Stütze 11 auch gelenkig mit dem Trägerelement 3 verbunden sein, wenn über die Stütze und das Umlenkelement 8 selbst die Spannkraft auf den Maskenabschnitt 4 aufgebracht werden soll. In diesem Fall greift das Spannelement beispielsweise in Gestalt einer Blattfeder an der Stütze 11 mit einer solchen Wirkrichtung an, daß durch Verlagerung des Umlenkelementes 8 von dem gegenüberliegenden Umlenkelement weg der Maskenabschnitt 4 gestrafft wird.

Fig. 3 gibt eine Haltevorrichtung 5 für den Maskenabschnitt 4 wieder, die in gleicher Weise wie das Ausführungsbeispiel nach Fig. 2 ein Umlenkelement 8 besitzt. Jedoch ist hier die Stütze 11 teleskopisch ausgebildet und besitzt hier einen Zapfen 17, der koaxial in eine Hülse 16 hineinragt, die über eine radiale Klemmschraube 18 mit dem Zapfen 17 verspannt werden kann. Dadurch kann die wirksame Länge der Stütze 11 variiert und der Maskenabschnitt 4 exakt auf die Grundebene einjustiert werden.

Weiter besitzt die Haltevorrichtung 5 nach Fig. 3 als Spannelement eine Rolle 19, die ähnlich wie ein selbsttätiger Gurtwickler eine innen liegende, in der Zeichnung nicht näher dargestellte Feder haben kann, die bei gestellfester Abstützung eine Drehkraft auf die Rolle 19 überträgt. An der Rolle 19 ist das Ende 10 des Maskenabschnittes 4 tangential befestigt, so daß bei auf die Rolle 19 in Pfeilrichtung wirkender Drehkraft der Maskenabschnitt 4 gestrafft wird.

Wie ferner in Fig. 3 angedeutet, kann die Rolle 19 als Spule ausgebildet sein und einen Wickel 20 des den Maskenabschnitt 4 bildenden streifenförmigen Materials aufnehmen. Die in Fig. 3 nicht gezeigte, gegenüberliegende Haltevorrichtung 5 für den Maskenabschnitt 4 ist in gleicher Weise mit einer spulenförmigen Rolle 19 ausgebildet, so daß von der einen Haltevorrichtung 5 der Maskenabschnitt 4 abgespult und in der gegenüberliegenden Haltevorrichtung wieder aufgespult werden kann. Es ist daher möglich, bei Beschädigungen oder sonstigen Beeinträchtigungen den Maskenabschnitt 4 weiterzuspulen, solange bis wieder ein unbeschädigter Abschnitt zur Verfügung steht.

**Patentansprüche**

1. Vorrichtung zur Bildung einer Maske für die Begrenzung eines Ausschnittes einer durchleuchtbaren Vorlage an einem Wiedergabe- oder Kopiergerät zur Vorbereitung oder Erstellung einer Druckvorlage (6) oder einer Druckplatte mit streifenförmigen Maskenabschnitten (4) aus einer dünnen, flexiblen Metallfolie, die jeweils an beiden Enden mit Haltevorrichtungen (5), welche die Maskenabschnitte (4) in einer Grundebene fixieren, an einem Trägerelement (3) befestigt sind, dadurch gekennzeichnet, daß zumindest eine der Haltevorrichtungen (5) für jeweils einen der Maskenabschnitte (4) ein Umlenkelement (8), über das der Maskenabschnitt (4) aus der Grundebene heraus zum Trägerelement (3) hin abgelenkt ist sowie ein den Maskenabschnitt (4) mit einer Zugkraft beaufschlagendes Spannelement (12, 19) aufweist, das am umgelenkten Ende (10) des Maskenabschnittes (4) unmittelbar oder mittelbar über das Umlenkelement (8) angreift.

2. Vorrichtung nach Anspruch 1, dadurch gekennzeichnet, daß das Umlenkelement (8) schwenkbar und/oder verschieblich an dem Trägerelement (3) angeordnet ist und das Spannelement mit dem Umlenkelement (8) derart verbunden ist, daß der Maskenabschnitt (4) von der Spannkraft in Richtung von der zweiten, gegenüberliegenden Haltevorrichtung weg beaufschlagt ist.

3. Vorrichtung nach Anspruch 1 oder 2, dadurch gekennzeichnet, daß das Spannelement (12, 19) federnd ausgebildet ist und daran das umgelenkte Ende (10) des Maskenabschnittes (4) unter Zug befestigt ist.

4. Vorrichtung nach einem der Ansprüche 1 bis 3, dadurch gekennzeichnet, daß das Umlenkelement (8) eine zylindrische Rolle oder ein feststehendes zylindrisches Kurvenelement (9) ist, wobei die Zylinderachse zur Querrichtung des Maskenabschnittes (4) parallel ist.

5. Vorrichtung nach einem der Ansprüche 1 bis 4, dadurch gekennzeichnet, daß das Umlenkelement (8) am Ende einer Stütze (11) angebracht ist, die an dem Trägerelement (3) angeordnet ist.

6. Vorrichtung nach Anspruch 5, dadurch gekennzeichnet, daß die Stütze (11) aus wenigstens zwei in Längsrichtung relativ zueinander verschieblichen, feststellbaren Teilen (16, 17) besteht.

7. Vorrichtung nach Anspruch 5 oder 6, dadurch gekennzeichnet, daß die Stütze (11) eine Längsführung für das Spannelement (12) hat, und an der Stütze (11) eine Feder (15) angeordnet ist, die in Längsrichtung der Stütze (11) wirkt.

8. Vorrichtung nach Anspruch 7, dadurch gekennzeichnet, daß das Spannelement ein die Stütze (11) umfassender Ring (12) ist, wobei die Feder (15) eine zwischen dem Ring (12) und dem Umlenkelement (8) auf der Stütze (11) angeordnete Druckfeder ist.

9. Vorrichtung nach einem der Ansprüche 1 bis 6, dadurch gekennzeichnet, daß das Spannelement eine in Umfangsrichtung federbeaufschlagte Rolle (19) ist, die achsparallel neben dem Umlenkelement (8) angeordnet und an der das Ende (10) des Maskenabschnittes (4) tangential befestigt ist.

10. Vorrichtung nach Anspruch 9, dadurch gekennzeichnet, daß die federbeaufschlagte Rolle (19) als Spule zur Aufnahme eines Wickels (20) des Maskenabschnittes (4) ausgebildet ist.

11. Vorrichtung nach einem der Ansprüche 5 bis 10, dadurch gekennzeichnet, daß das Umlenkelement (8) um die Längsachse der Stütze (11) drehbar angeordnet ist.

12. Vorrichtung nach einem der Ansprüche 1 bis 11, dadurch gekennzeichnet, daß der Maskenabschnitt (4) im Bereich seiner beiden Enden über je ein Umlenkelement (8) geführt ist, die über je eine Hubvorrichtung mit dem Trägerelement (3) verbunden sind.

**Claims**

1. Device for making a mask for limiting a cutout of a transmitted-light original on a reproduction unit or copier for the preparation or production of a master copy (6) or a printing plate, with strip-shaped mask portions (4) consisting of a thin flexible metal foil and each being fastened at both ends to a carrier element (3) by means of holding devices (5) which fix the mask portions (4) in a basic plane, characterized in that at least one of the holding devices (5) for a particular one of the mask portions (4) has a deflecting element (8), via which the mask portion (4) is deflected out of the basic plane towards the carrier element (3), and a tensioning element (12, 19) which exerts a tensile force on the mask portion (4) and which engages on the deflected end (10) of the mask portion (4) directly or indirectly via the deflecting element (8).

2. Device according to Claim 1, characterized in that the deflecting element (8) is arranged pivotably and/or displaceably on the carrier element (3), and the tensioning element is connected to the deflecting element (8), in such a way that the mask portion (4) is stressed in the direction away from the second opposite holding device by the tensioning force.

3. Device according to Claim 1 or 2, characterized in that the tensioning element (12, 19) is made resilient, and the deflected end (10) of the mask portion (4) is fastened to it under tension.

4. Device according to one of Claims 1 to 3, characterized in that the deflecting element (8) is a cylindrical roller or a stationary cylindrical cam element (9), the cylinder axis being parallel to the transverse direction of the mask portion (4).

5. Device according to one of Claims 1 to 4, characterized in that the deflecting element (8) is attached to the end of a stay (11) which is arranged on the carrier element (3).

6. Device according to Claim 5, characterized in that the stay (11) consists of at least two lockable parts (16, 17) displaceable relative to one another in the longitudinal direction.

7. Device according to Claim 5 or 6, characterized in that the stay (11) has a longitudinal guide for the tensioning element (12), and a spring (15) is arranged on the stay (11) and acts in the longitudinal direction of the stay (11).

8. Device according to Claim 7, characterized in that the tensioning element is a ring (12) surrounding the stay (11), the spring (15) being a compression spring arranged on the stay (11) between the ring (12) and the deflecting element (8).

9. Device according to one of Claims 1 to 6, characterized in that the tensioning element is a roller (19) which is spring-loaded in the peripheral direction and is arranged parallel to the axis of and next to the deflecting element (8) and to which the end (10) of the mask portion (4) is fastened tangentially.

10. Device according to Claim 9, characterized in that the spring-loaded roller (19) is designed as a reel for receiving a coil (20) for the mask portion (4).

11. Device according to one of Claims 5 to 10, characterized in that the deflecting element (8) is arranged so as to be rotatable about the longitudinal axis of the stay (11).

12. Device according to one of Claims 1 to 11, characterized in that the mask portion (4) is guided via a deflecting element (8) in the region of each of its two ends, these deflecting elements (8) each being connected to the carrier element (3) via a lifting device.

## Revendications

1. Dispositif pour former un masque en vue de délimiter une portion d'un document transparent dans un appareil de reproduction ou de copie pour préparer ou établir un document d'impression ou une plaque d'impression à l'aide de tronçons de masquage (4) en forme de bande en une feuille métallique mince et flexible, qui sont fixés à chacune de leurs extrémités à un élément porteur (3) au moyen de dispositifs de maintien (5) qui fixent les tronçons de masquage (4) dans un plan de base, caractérisé en ce qu'au moins un des dispositifs de maintien (5) comporte pour chacun des tronçons de masquage (4) un élément de renvoi (8) par lequel le tronçon de masquage (4) est dévié hors du plan de base vers l'élément porteur (3) ainsi qu'un élément de tension (12, 19) appliquant une force de traction au tronçon de masquage (4) et qui accroche l'extrémité (10) déviée du tronçon de masquage (4) directement ou indirectement sur l'élément de renvoi (8).

2. Dispositif suivant la revendication 1, caractérisé en ce que l'élément de renvoi (8) est monté de manière rotative et/ou coulissante sur l'élément porteur (3) et en ce que l'élément de tension est relié à l'élément de renvoi (8) de telle façon que le tronçon de masquage (4) soit attaqué par la force de tension dans la direction provenant du second dispositif de maintien opposé au premier.

3. Dispositif suivant la revendication 1 ou 2, caractérisé en ce que l'élément de tension (12, 19) est pourvu de ressorts et en ce que l'extrémité (10) déviée du tronçon de masquage (4) y est accrochée sous traction.

4. Dispositif suivant une des revendications 1 à 3, caractérisé en ce que l'élément de renvoi (8) est un galet cylindrique ou un élément courbe cylindrique fixe (9), dont l'axe longitudinal est parallèle à la direction transversale du tronçon de masquage (4).

5. Dispositif suivant une des revendications 1 à 4, caractérisé en ce que l'élément de renvoi (8) est monté à l'extrémité d'un support (11), qui est fixé à l'élément porteur (3).

6. Dispositif suivant la revendication 5, caractérisé en ce que le support (11) se compose d'au moins deux parties (16, 17) pouvant coulisser en direction longitudinale l'une par rapport à l'autre et pouvant être immobilisées l'une par rapport à l'autre.

7. Dispositif suivant la revendication 5 ou 6, caractérisé en ce que le support (11) présente un guide longitudinal pour l'élément de tension (12) et en ce que le support (11) est équipé d'un ressort (15) qui agit suivant la direction longitudinale du support (11).

8. Dispositif suivant la revendication 7, caractérisé en ce que l'élément de tension est une bague (12) entourant le support (11), le ressort (15) étant un ressort de pression monté sur le support (11) entre la bague (12) et l'élément de renvoi (8).

9. Dispositif suivant une des revendications 1 à 6, caractérisé en ce que l'élément de tension est un galet (19) sollicité en direction périphérique par un ressort qui est monté avec son axe parallèle à l'axe de l'élément de renvoi (8) et auquel l'extrémité (10) du tronçon de masquage (4) est accrochée tangentiellement.

10. Dispositif suivant la revendication 9, caractérisé en ce que le galet (19) sollicité par un ressort est conçu comme une bobine destinée à porter une spire (20) du tronçon de masquage (4).

11. Dispositif suivant une des revendications 5 à 10, caractérisé en ce que l'élément de renvoi (8) peut pivoter autour de l'axe longitudinal du support (11).

12. Dispositif suivant une des revendications 5 à 10, caractérisé en ce que le tronçon de masquage (4) est, dans la région de ses deux extrémités, guidé sur des éléments de renvoi (8), qui sont chacun reliés à l'élément porteur (3) par l'intermédiaire d'un dispositif de montée.

Fig.1

Fig.2

Fig.3